# EUROPÄISCHE PATENTSCHRIFT

(11) **EP 2 274 656 B1**
(45) Veröffentlichungstag und Bekanntmachung des Hinweises auf die Patenterteilung: **17.01.2018**
(21) Anmeldenummer: 09745648.7
(22) Anmeldetag: 22.04.2009
(51) Int. Cl.: G05B 23/02

(54) **MESSGERÄT MIT EINER MESS- UND BETRIEBSELEKTRONIK ZUR ÜBERWACHUNG EINES MESSSIGNALS**
MEASURING DEVICE COMPRISING A MEASURING AND OPERATING ELECTRONICS SYSTEM FOR MONITORING A MEASUREMENT SIGNAL
APPAREIL DE MESURE COMPORTANT UNE ÉLECTRONIQUE DE MESURE ET D'EXPLOITATION POUR LE CONTRÔLE D'UN SIGNAL DE MESURE

(30) Priorität: 16.05.2008 DE 102008001832
(43) Veröffentlichungstag der Anmeldung: 19.01.2011
(73) Patentinhaber: Endress+Hauser Flowtec AG, 4153 Reinach (CH)
(72) Erfinder: KARBULA, Jiri, CH-4125 Riehen (CH); FUZ, Andreas, 79588 Efringen-Kirchen (DE)
(74) Vertreter: Andres, Angelika Maria
(86) Internationale Anmeldenummer: PCT/EP2009/054768
(87) Internationale Veröffentlichungsnummer: WO 2009/138315

(56) Entgegenhaltungen:
- EP-A2- 1 860 513
- US-B2- 7 098 798

## Beschreibung

Die Erfindung bezieht sich auf ein Messgerät mit einer Mess- und Betriebselektronik, wobei die Mess- und Betriebselektronik zur Bestimmung und/oder Überwachung mindestens eines Messsignals einer physikalischen und/oder chemischen Messgröße eines Messstoffs dient, wobei die Mess- und Betriebselektronik mindestens eine Steuereinheit und einen Stromregler aufweist, wobei die Mess- und Betriebselektronik an eine Stromschleife angeschlossen ist, wobei ein Messsignalstrom in der Stromschleife einen Messwert der Messgröße repräsentiert, wobei die Steuereinheit mit dem Stromregler verbunden ist und dem Stromregler eine Führungsgröße vorgibt, wobei die Führungsgröße einem Sollwert des Messsignalstroms entspricht, wobei dem Stromregler eine Rückführgröße zugeführt ist, wobei die Rückführgröße einem in der Zwei-Leiter-Stromschleife eingestellten Istwert des Messsignalstroms entspricht, wobei die Rückführgröße und/oder die Führungsgröße an einem Eingang des Stromreglers anliegen, wobei der Stromregier eine aus einer Regelabweichung zwischen Rückführ- und Führungsgröße gebildete Stellgröße ausgibt.

Ein in der Industrie weit verbreiteter Standard zur Übermittlung von Messsignalen einer physikalischen und/oder chemischen Messgröße ist eine elektrische Stromschleife. Hierbei entspricht ein in der Stromschleife eingestellter elektrischer Strom zwischen 4 Milliampere (mA) und 20 mA dem Messwert der physikalischen und/oder chemischen Messgröße.

Aufgrund von Driften und Ungenauigkeiten wird ein etwas größerer Strombereich zugelassen; bspw. ein Strom zwischen 3,8 mA und 20,5 mA. Ströme die kleiner als 3,6 mA bzw. größer als 21 mA sind, sollten von etwaigen Auswerteeinheiten nicht mehr als eine dem Messwert entsprechende Größe interpretiert werden. Ein in der Stromschleife eingestellter Strom kleiner als 3,6 mA oder größer als 21 mA wird daher als Fehlerstrom identifiziert.

Feldgeräte, insbesondere Messgeräte, die nur einen Strombedarf von weniger als 3,6 mA haben, können aus der Stromschleife selbst mit Energie versorgt werden. Diese sog. Zwei-Leiter-Messgeräte (2L-Messgeräte) müssen über lediglich eine Leitung mit zwei Adern angeschlossen werden. Über die Zwei-Leiter-Stromschleife (2L-Stromschleife) ist das Feldgerät mit einer Stromquelle und/oder mit einer Prozessleitstelle verbunden. Feldgeräte mit einem höheren Stromverbrauch müssen mit einer zusätzlichen Hilfsenergie versorgt werden.

Oft ist es erforderlich, außer dem analogen elektrischen Signal noch weitere Informationen, bspw. Kalibrier-, Parametrierdaten, Betriebstemperatur und -Spannung usw. über die 2L-Stromschleife zu übertragen. Um diese Informationen zu übertragen, wird das Messsignal von einem höherfrequenten Signal überlagert. Ein Protokoll zur Übertragung solcher Informationen ist bspw. das HART (Highway Adressabei Remote Transducer)-Protokoll.

Der analoge, in der 2L-Stromschleife eingestellte Messsignalstrom wird meistens durch einen Regelkreis in der 2L-Stromschleife eingestellt. Dabei ist wenigstens ein Teil der Mess- und Betriebselektronik Teil des Regelkreises. Zum Zwecke der Regelung wird die dem Istwert des Messsignalstroms entsprechende Rückführgröße von der Mess- und Betriebselektronik zurückgelesen und mit der dem Sollwert entsprechenden Führungsgröße verglichen. Üblicherweise wird die Führungsgröße von einer Steuereinheit ausgegeben. Die Steuereinheit gibt entsprechend Messsignalen eines Messaufnehmers oder Sensors die Führungsgröße aus. Bei einer Messwertänderung unterscheidet sich der in der 2L-Stromschleife eingestellte Istwert vom Sollwert. Aus der Regelabweichung zwischen Ist- und Sollwert wird die entsprechende Stellgröße erzeugt, mittels derer der Messsignalstrom in der 2L-Stromschleife verändert wird.

Bei vielen Anwendungen kann die Größe des übermittelten Messsignals einen erheblichen Einfiluss auf die Umgebung des Messgerätes und/oder die Umwelt haben. Insbesondere bei chemischen und umweltgefährdenden Prozessen, bei denen ein Messwert der Temperatur, des Füllstands, des Drucks, des Durchflusses oder der Zusammensetzung eines Messstoffs übermittelt wird, ist ein sicherer Ablauf des Prozesses entscheidend. Daher ist es äußerst wichtig, dass das übermittelte Messsignal tatsächlich dem gemessen Messwert entspricht. Geräte und Systeme in sicherheitsrelevanten Anwendungen müssen daher besonderen Anforderungen genügen, u.a. die Normen zur funktionalen Sicherheit (z.B. IEC 61506, IEC 61511 etc.) erfüllen. Zentraler Bestandteil der Normen zur funktionalen Sicherheit ist das sog. Safety Integrity Level (SIL). Je nach der von einem Prozess oder einer Anlage ausgehenden Gefahr wird von einer Anwendung eine entsprechende SIL-Tauglichkeit gefordert. Das SIL gibt vor, mit welcher Wahrscheinlichkeit ein auftretender Fehler eines Gerätes oder einer Anwendung detektiert wird. Dabei wird zwischen einem SIL von 1 bis 4 unterschieden, wobei 1 die niedrigste und 4 die höchste Sicherheitsstufe angibt.

Aus der Offenlegungsschrift EP 1 860 513 ist eine Schaltung bekannt geworden, die gewährleistet, dass ein in einer Stromschleife eingestellter Strom dem tatsächlichen Wert der zu repräsentierenden Messgröße entspricht. Die Schaltung beruht auf der redundanten Einstellung des Wertes des Schleifenstroms und einer Überwachung desselben. Zwar erhöhen die im Stand der Technik verwendeten redundant ausgelegten, elektrischen, elektronischen und/oder elektronisch programmierbaren Bauteile unter Umständen die funktionale Sicherheit der Gerätschaften, aber als ein Nachteil sind die ebenso erhöhten Herstellungs- und Fertigungskosten bei einer redundanten Auslegung des Systems und der Bauteile anzusehen.

Weiterhin ist aus der Patentschrift US 7,098,798 B2 eine Schaltung zur Überwachung eines Stroms in einer 2L-Stromschleife bekannt geworden. Dafür wird der Spannungsabfall über einem Widerstand mittels einer Auswerteschaltung gemessen. Ein Nachteil ist darin zu sehen, dass der Widerstand selbst nicht überwacht wird und eine von dem Widerstand ausgehende Fehlfunktion nicht erkannt wird.

Der Erfindung liegt daher die Aufgabe zugrunde, ein kostengünstiges Messgerät mit einer verbesserten funktionalen Sicherheit vorzuschlagen.

Die Aufgabe wird erfindungsgemäß dadurch gelöst, dass mindestens eine Auswerteeinheit vorgesehen ist, dass die Auswerteeinheit mindestens einen vom Stromregler ausgegebenen Wert der Stellgröße mit mindestens einem Referenzwert vergleicht, dass der Vergleich angibt, ob der Wert der Stellgröße den Referenzwert über- oder unterschreitet. Die vorgeschlagene Auswerteeinheit ermöglicht es, das Abweichen der Stellgröße von einem Referenzwert oder das Über- oder Unterschreiten der Stellgröße über oder unter einen vorgegebenen Referenzwert zu detektieren. Sind insbesondere zwei unterschiedliche Referenzwerte vorgesehen, so ist feststellbar, ob die Stellgröße einen der Referenzwerte überschreitet oder unterschreitet oder in einem Bereich zwischen den Referenzwerten liegt. Das Ausgangssignals der Auswerteeinheit gibt an, ob die Stellgröße zwischen den Referenzwerten liegt oder einen oder beide Referenzwerte über- oder unterschreitet. Da sich Fehler oder Störungen der Mess- und Betriebselektronik oftmals in einem anormalen Messsignal äußern, bspw. durch übermäßige oder verminderte Spannungen und Ströme, ermöglicht die erfindungsgemäße Auswerteeinheit eine Detektion solcher anormalen Abweichungen.

Gemäß einer vorteilhaften Ausgestaltung gibt die Auswerteeinheit mindestens ein Ausgangssignal aus. Das Ausgangssignal gibt an, dass die Stellgröße einen vorgegebenen Referenzwert über- oder unterschritten hat. Ausgehend vom Ausgangssignal der Auswerteeinheit kann eine Abweichung oder ein Über- bzw. Unterschreiten der Stellgröße vom Referenzwert signalisiert oder entsprechende Maßnahmen ergriffen werden.

Gemäß einer vorteilhaften Ausgestaltung weist das Messgerät bzw. die Mess- und Betriebselektronik ein Stellglied auf, wobei das Stellglied den Messsignalstrom mittels der vom Stromregler ausgegebenen Stellgröße in der Stromschleife einstellt. Dafür wird die vom Stromregler ausgegebene Stellgröße oder eine entsprechende Größe dem Stellglied, bspw. einem Transistor, über eine Ansteuerung zugeführt. Das Stellglied stellt daraufhin einen entsprechenden Messsignalstrom in der Stromschleife ein. Über das Stellglied werden auch die Stromzufuhr und der Energiebedarf der sonstigen Komponenten des Messgerätes und der Mess- und Betriebselektronik geregelt, die einer Energiezufuhr bedürfen. Die Stromschleife ist bspw. eine Zwei-Leiter-Stromschleife (2L-Stromschleife).

Gemäß einer vorteilhaften Weiterbildung ist die Steuereinheit die Auswerteeinheit oder Teil der Auswerteeinheit. Verfügt die Steuereinheit bspw. über einen analogen Eingang, so kann die Stellgröße direkt von der Steuereinheit ausgewertet werden. Dafür wird die vom Stromregler ausgegebene Stellgröße an die Steuereinheit übertragen. Die Auswertung, insbesondere der Vergleich der Stellgröße mit dem mindestens einen Referenzwert, wird mittels interner, in der Steuereinheit enthaltener Bauteile, Schaltungen und/oder Algorithmen ausgeführt. Über einen externen Analog/Digital - Umformer lässt sich die Stellgröße digitalisieren und so auch an einen digitalen Eingang der Steuereinheit leiten.

Gemäß einer weiteren vorteilhaften Weiterbildung gibt die Auswerteeinheit das Ausgangssignal an die Steuereinheit aus. Insbesondere wenn die Auswerteeinheit nicht die Steuereinheit oder Teil der Steuereinheit ist, wird das von der Auswerteeinheit zur Verfügung gestellte Ausgangssignal der Steuereinheit zugeführt und die Steuereinheit wertet das Ausgangssignal aus und veranlasst geeignete Maßnahmen bspw. zur Erhaltung der Sicherheit.

Gemäß einer weiteren vorteilhaften Weiterbildung weist der Stromregler mindestens ein Vergleichsglied auf, wobei das Vergleichsglied die Regelabweichung bestimmt. Das Vergleichsglied ist eine Funktionseinheit, die aus der Führungs- und der Rückführgröße die Regelabweichung bestimmt. Die Regelabweichung ist bspw. die Differenz zwischen der dem Istwert des Messsignalstrams entsprechenden Rückführgröße und der dem Sollwert des Messsignalstroms entsprechenden Führungsgröße.

Gemäß einer weiteren vorteilhaften Weiterbildung weist der Stromregier mindestens einen Operationsverstärker auf. Je nach Wahl und Schaltung der Bauelemente kann der Operationsverstärker verschiedene lineare und nichtlineare Operationen durchführen, wie etwa verstärken, logarithmieren oder integrieren, mehrere Signale vergleichen, addieren, subtrahieren oder als Schwellwertschalter, insbesondere Komparator, dienen. Die mittels dieser Operationen gebildeten Größen können als Stellgröße für den zu regelnden Messsignalstrom dienen. Der Operationsverstärker gleicht bei geeigneter Beschaltung die Differenz zwischen dem an seinem invertierenden Eingang anliegenden Signal und dem an seinem nicht invertierenden Eingang anliegenden Signal beinahe instantan aus und gibt die Differenz verstärkt aus.

Gemäß einer weiteren vorteilhaften Weiterbildung ist das Vergleichsglied elektrisch mit einem Eingang des Operationsverstärkers verbunden, und der Operationsverstärker erzeugt ausgehend von der Regelabweichung die Stellgröße und gibt die Stellgröße aus. Die Regelabweichung kann bspw. durch Zusammenführen der Rückführgröße und der Führungsgröße an einem Summationspunkt ermittelt werden. Ein Summationspunkt ist ein Knotenpunkt eines elektrischen Netzwerks. Das vom Summationspunkt abgeführte Signal entspricht dann bspw. der Differenz zwischen Führungs- und Rückführgröße. Dabei ist die Führungs- und/oder die Rückführgröße eine dem Ist- und/oder dem Sollwert entsprechende elektrische Spannung oder ein elektrischer Strom. Die vom Summationspunkt in den Operationsverstärker ausgegebene Regelabweichung ist dann die Spannungsdifferenz zwischen Führungs- und Rückführgröße. Der Operationsverstärker ist bspw. als invertierender Verstärker beschaltet. Die Regelabweichung liegt an einem ersten Eingang des Operationsverstärkers an und an einem zweiten Eingang liegt eine Referenzspannung bspw. die Masse (0 V) oder ein geeignetes Bezugspotential an. Der erste Eingang ist der invertierende und der zweite der nicht invertierende Eingang des Operationsverstärkers. Bei einer solchen Beschaltung gibt der Operationsverstärker die Differenz der Regelabweichung vom Bezugspotential als Stellgröße aus.

Gemäß einer weiteren vorteilhaften Weiterbildung ist der Operationsverstärker mit einer Betriebsspannung versorgt und weist einen Arbeitsbereich auf, wobei der Arbeitsbereich unterhalb der Betriebspannung liegt. Der Operationsverstärker wird oft symmetrisch mit zwei identischen Gleichspannungen betrieben, bspw. ±5 V, ±12 V und ±15 V. Möglich ist auch eine Beschaltung des ersten Betriebsanschlusses mit nur einer Gleichspannung. Der zweite Betriebsanschluss ist dann mit der Masse oder dem Bezugspotential verbunden. Der Arbeitsbereich des Operationsverstärkers liegt zwischen der oberen Betriebsspannung und der unteren Betriebsspannung. Dabei ist der Arbeitsbereich so ausgelegt, dass die Stellgröße im Falle einer fehlerfreien Mess- und Betriebselektronik bzw. eines fehlerfreien Messsignals innerhalb des Arbeitsbereichs des Operationsverstärkers liegt. Weiterhin ist der Arbeitsbereich so ausgelegt, dass die Stellgröße einen Messsignalstrom zwischen bspw. 4 mA und 20 mA einstellt, ohne den Arbeitsbereich des Operationsverstärker zu verlassen. Eine Messwertänderung vom minimalen Messwert zum maximalen Messwert entspricht dann einer Änderung des Messsignalstroms, von dem Messsignalstrom der den minimalen Messwert repräsentiert, zu dem Messsignalstrom der den maximalen Messwert repräsentiert, also bspw von 4 mA auf 20 mA oder 3,8 auf 20,5 mA. Der Arbeitsbereich und die Funktionsweise des Operationsverstärkers sind so ausgelegt, dass der Operationsverstärker seinen Arbeitsbereich selbst bei einer maximalen Messwertänderung nicht oder nur kurzzeitig (für Zeitspannen im Millisekundenbereich) verlässt.

Gemäß einer weiteren vorteilhaften Weiterbildung verlässt die Stellgröße den Arbeitsbereich des Operationsverstärkers, im Falle, dass die Differenz zwischen Führungsgröße und Rückführgröße nach einer vorgegebenen Zeitspanne nicht annähernd Null ist. Im fehlerfreien Regelbetrieb gibt die Steuereinheit die Führungsgröße aus, wobei die Führungsgröße dem Sollwert des Messsignalstroms entspricht. Die Führungs- und die Rückführgröße wird an den Stromregler übermittelt. Die Rückführgröße entspricht dem Istwert des in der 2L-Stromschleife eingestellten Messsignalstroms. Bei einer einzustellenden Messwertänderung sind Rückführgröße und Führungsgröße respektive Ist- und Sollwert nicht identisch und am Eingang des Operationsverstärkers liegt eine Regelabweichung ungleich Null an. Der Operationsverstärker gibt eine der Regelabweichung entsprechende Stellgröße nahezu instantan aus. Die Verzögerungszeit liegt typischerweise im Mikrosekundenbereich (10⁻⁶ s). Dem entsprechend stellt sich in der 2L-Stromschleife die Führungsgröße ein und die Regelabweichung zwischen Ist- und Sollwert geht gegen Null. Liegt hingegen ein Fehler oder Defekt vor, so verschwindet die Regelabweichung nicht, sondern es liegt weiterhin eine Spannungsdifferenz zwischen den Eingängen des Operationsverstärkers vor. Da der als Stromregler fungierende Operationsverstärker die Spannungsdifferenz nicht ausgleichen kann, übersteuert er und verlässt seinen Arbeitsbereich. Die Zeitspanne nach der der Operationsverstärker seinen Arbeitsbereich verlässt, wird durch die Charakteristiken der verwendeten Bauteile, wie bspw. Operationsverstärker, Kondensatoren und Widerstände, bestimmt.

Gemäß einer weiteren vorteilhaften Weiterbildung ist, im Falle dass die Stellgröße außerhalb des Arbeitsbereichs des Operationsverstärkers liegt, die Stellgröße annähernd gleich der Betriebsspannung des Operationsverstärkers. Verlässt der Operationsverstärker seinen Arbeitsbereich aufgrund einer vorhandenen Spannungsdifferenz zwischen den an seinen Eingängen anliegenden Signalen und kann der Operationsverstärker die Spannungsdifferenz nicht ausgleichen, so geht der Operationsverstärker in seinen (oberen oder unteren) Sättigungsbereich über. Der Sättigungsbereich entspricht dabei annähernd der (oberen oder unteren) Betriebsspannung des Operationsverstärkers, wobei die Sättigungsspannung von der Betriebsspannung abweicht, da bei einem realen Operationsverstärker Spannungs- und anderweitige Verluste auftreten.

Gemäß einer weiteren vorteilhaften Weiterbildung liegt der mindestens eine Referenzwert oberhalb bzw. unterhalb des Arbeitsbereichs des Stromreglers. Durch eine solche Belegung der Referenzwerte werden Abweichungen der Stellgröße aus dem Arbeitsbereich detektiert.

Gemäß einer weiteren vorteilhaften Weiterbildung besteht die Auswerteeinheit teilweise aus einer Komparatorschaltung und/oder einem Analog-Digital-Umformer. Eine Komparatorschaltung bspw. ein geeignet beschalteter Operationsverstärker dient dem Vergleich der Stellgröße mit einem Referenzwert. Der Referenzwert kann aus der Betriebsspannung des im Stromregler enthaltenen Operationsverstärkers bspw. mittels Spannungsteilern abgeleitet werden. Der Komparator vergleicht dann den Wert der Stellgröße mit dem Referenzwert und erzeugt ein entsprechendes Ausgangssignal. Zusätzlich oder alternativ ist ein Analog/Digital-Umformer vorgesehen, der die Stellgröße digitalisiert und ein entsprechendes Ausgangssignal zur Weiterverarbeitung ausgibt. Weiterhin kann ein digitaler Komparator vorgesehen sein, der die digitalisierte Stellgröße mit einem ebenso in digitaler Form vorliegendem Referenzwert vergleicht und einen entsprechenden Wert oder ein Signal als Ausgangssignal zur Verfügung stellt.

Gemäß einer weiteren vorteilhaften Weiterbildung ist das von der Auswerteeinheit erzeugte Ausgangssignal ein digitales Signal. Durch ein digitales Ausgangssignal ist eine Weiterleitung und Weiterverarbeitung des Ausgangssignals an einen digitalen Schaltkreis, bspw. einen integrierten Schaltkreis insbesondere eine CPU oder ein ASIC möglich.

Gemäß einer weiteren vorteilhaften Weiterbildung besteht das Ausgangssignal aus einem Bit oder aus n-Bits, wobei n eine natürliche Zahl größer eins ist. Ein analoger Komparator stellt bspw. ein solches aus einem Bit bestehendes Ausgangssignal zur Verfügung. In der Auswerteeinheit kann ein Analog/Digital-Umformer vorgesehen sein. Ein solcher Analog/Digital-Umformer erzeugt ein aus n Bits bestehendes Ausgangssignal.

Gemäß einer weiteren vorteilhaften Weiterbildung gibt die Steuereinheit ein dem Ausgangssignal der Auswerteeinheit entsprechendes Signal, insbesondere ein Fehlersignal, aus. Ausgehend vom Ausgangssignal der Auswerteeinheit, das bspw. der Steuereinheit zugeführt wird, wird ein entsprechendes Signal an die weitere Mess- und Betriebselektronik gesendet. Dabei kann es sich bspw. um ein OK-Signal, ein Fehler-Signal oder ein sonstiges Steuer- oder Regelsignal handeln. Das entsprechende Signal. insbesondere das Fehlersignal, wird bspw. nur dann ausgelöst, wenn die Stellgröße einen der Referenzwerte über- bzw. unterschreitet. Das Fehlersignal löst, dann bspw. einen Fehlerstrom in der 2L-Stromschleife aus. Je nach Fehlersignal kann es sich dabei um einen High- oder Low-Alarm handeln, d.h. einen Fehlerstrom von mehr als 20,5 mA oder weniger als 3,6 mA.

Gemäß einer weiteren vorteilhaften Weiterbildung gibt die Steuereinheit das Fehlersignal aus, wenn die Stellgröße den Referenzwert länger als eine vorgegebene Zeitspanne, insbesondere annähernd eine Sekunde, über- oder unterschreitet. Bei der Regelung des Messsignalstroms kann es zu kurzzeitigen, nicht durch einen Fehler verursachten, Über- oder Unterschreitungen des/der Referenzwerte/s kommen. Die vorgegebene Zeitspanne, nach der ein Fehlersignal ausgegeben wird, kann bspw. entsprechend einer NAMUR-Empfehlung, eines Standards oder einer vorgeschriebenen Norm gewählt werden.

Die erfindungsgemäße Schaltung ermöglicht es u.a. Fehler, die von
- einer falschen oder fehlerhaften Spezifikation der Systemkomponenten,
- der Hardware oder der Software;
- einem statistischen Hardware Fehler oder Ausfall;
- einen systematischen Hardware oder Software Fehler;
- einem menschlichen Fehler;
- Umwelteinflüssen, insbesondere atmosphärischen, elektromagnetischen, kalorimetrischen und/oder mechanischen Einflüssen;
- Störungen des Versorgungssystems z.B. Spannungsschwankungen oder Spannungsverlust
herrühren und sich in einem fehlerhaften Messsignal niederschlagen, zu detektieren.

Eine weitere Möglichkeit zur Übermittlung von Messsignalen sind serielle Feldbus-Systeme z.B. Profibus PA und Foundation Fieldbus FF. Diese werden oftmals auch als 2-Leiter-Feldgeräte, insbesondere 2L-Messgeräte, realisiert, bei denen die Energieversorgung aus der Stromschleife sichergestellt wird. Im Gegensatz zu 2L-Messgeräten mit Stromschleife (z.B. mit einem einen Messwert repräsentierenden Messsignalstrom zwischen 4 und 20mA) ist der eingestellte Strom konstant, entspricht also nicht dem Messwert. Mess- und Steuersignale werden z.B. mittels Manchester-Codierung digital übertragen. D.h. auch die Feldbussysteme sind mit einem Stromregler ausgestattet. Dieser Wert muss zur Dimensionierung des Bussystems bekannt sein, da die Energieversorgung für mehrere Geräte gemeinsam erfolgt. Ein fehlerhafter Strom kann dazu führen, dass das ganze Bussystem ausfällt oder unstabil wird. Es ist also vorteilhaft den eingestellten Strom zu überwachen. Die Funktionsweise der Stromüberwachung erfolgt wie bei der oben beschriebenen Stromschleife.

Die Erfindung wird anhand der nachfolgenden Zeichnungen näher erläutert. Es zeigt:
Fig. 1: eine schematische Darstellung eines Schaltplans einer ersten Ausführungsform der erfindungsgemäßen Mess- und Betriebselektronik,
Fig. 2: eine schematische Darstellung eines Schaltplans einer zweiten Ausführungsform der erfindungsgemäßen Mess- und Betriebselektronik,
Fig. 3: eine schematische Darstellung eines Schaltplans einer dritten Ausführungsform der erfindungsgemäßen Mess- und Betriebselektronik,
Fig. 4: eine schematische Darstellung eines Schaltplans einer Ausführungsform der erfindungsgemäßen Mess- und Betriebselektronik bei einem Vier-Leiter-Gerät,
Fig. 5: eine schematische Darstellung eines Schaltplans einer weiteren Ausführungsform der erfindungsgemäßen Mess- und Betriebselektronik bei einem Vier-Leiter-Gerät,
Fig. 6: eine schematische Darstellung eines Stromreglers,
Fig. 7: eine schematische Darstellung des Arbeitsbereichs und der Betriebsspannung eines Operationsverstärkers, und
Fig. 8: Eingangs- und Ausgangssignal eines als Integrator beschalteten Operationsverstärkers.

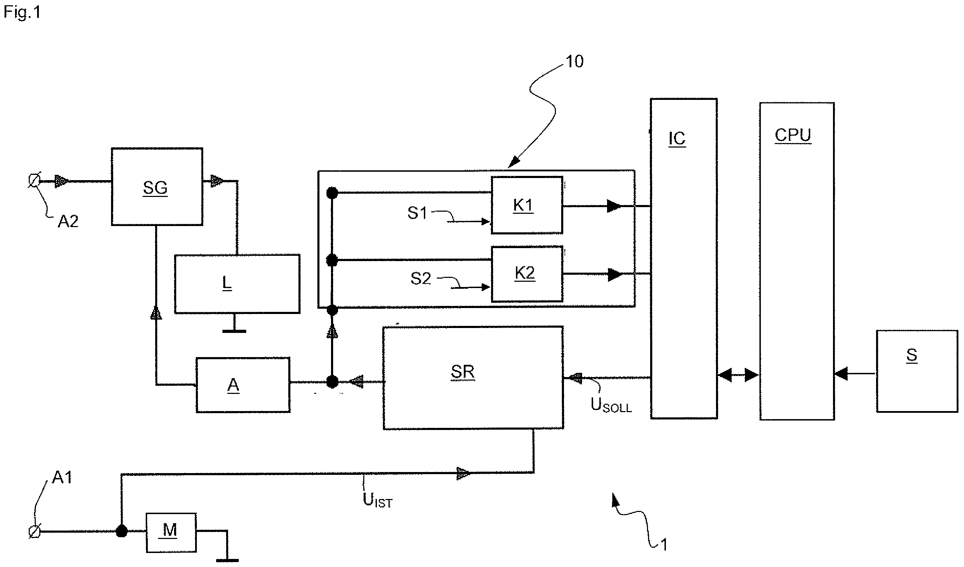

Figur 1 zeigt eine schematische Darstellung der erfindungsgemäßen Mess- und Betriebselektronik 1. Die Mess- und Betriebselektronik 1 ist über zwei Anschlüsse A1, A2 an ein Daten-Übertragungssystem angeschlossen, über das sowohl ein elektrischer Strom als auch prozessrelevante Daten übertragbar sind. Das Daten-Übertragungssystem ist bspw. eine Zwei-Leiter-Stromschleife (2L-Stromschleife). Über die 2L-Stromschleife ist die Mess- und Betriebselektronik 1 bspw. an ein Prozessleitsystem mit einem Prozessleitrechner und/oder an eine Energie- bzw. Gleichstromquelle angeschlossen, die das Messgerät mit einer Spannung bzw. einem Strom versorgt. Der über die 2L-Stromschleife übertragene elektrische Strom liegt zwischen bspw. 4 und 20mA oder 0 und 20mA.

Die Mess- und Betriebselektronik 1 ist Teil eines Messgerätes, das an die 2L-Stromschleife angeschlossen ist. Das Messgerät ist bspw. ein Feldgerät und/oder ein Messgerät der Prozessautomatisierungstechnik, das zur Aufnahme eines Drucks, eines Füllstands, eines Durchflusses, einer Temperatur und/oder einer Analyse eines Messstoffs dient.

Die gezeigte Ausgangsschaltung ist Teil der Mess- und Betriebselektronik 1 und besteht im Wesentlichen aus einem Regelstromkreis, der den in der 2L-Stromschleife eingestellten Strom regelt. Der Regelstromkreis besteht im Wesentlichen aus einer Steuereinheit IC, einem Stromregler SR, einem Stellglied SG, einer Ansteuerung A des Stellglieds SG und den Anschlüssen A1, A2 an die 2L-Stromschleife und der - nicht explizit gezeigten - 2L-Stromschleife.

An die gezeigte Mess- und Betriebselektronik 1 ist die eigentliche Versorgungselektronik des Messgerätes angeschlossen. Die Versorgungselektronik ist in Figur 1 symbolisch durch die Last L dargestellt. Die Versorgungselektronik beinhaltet bspw. einen Aktor, einen Sensor und die sonstigen Komponenten des Messgerätes, die eine Energiezufuhr benötigen. Der Ausgangsschaltung ist ein Messaufnehmer/Sensor S vorgelagert. Der Messaufnehmer/Sensor S dient dazu, einen Messwert einer Messgröße zu bestimmen und der Messgröße ein elektrisches Messsignal zuzuordnen. Die vom Messaufnehmer/Sensor S ausgegebenen Rohdaten werden durch eine erste Steuereinheit IC zu einem Messsignal weiterverarbeitet.

Das elektrische Messsignal wird einer Steuereinheit IC zugeführt. Die Steuereinheit ist bspw. eine Central Processing Unit (CPU) oder ein Application Specific Integrated Circuit (ASIC). Ein Bestandteil der Steuereinheit IC kann eine Speichereinheit bspw. in Form einer Read Only Memory (ROM)- oder Random Access Memory (RAM)-Einheit sein.

Das der Steuereinheit IC zugeführte Messsignal wird von dieser verarbeitet und eine entsprechende Führungsgröße U_{SOLL} ausgegeben. Die Führungsgröße U_{SOLL} entspricht dem in der 2L-Stromschieife einzustellenden Sollwert des Messsignalstroms. Das von der Steuereinheit IC empfangene Messsignal ist ein digitales oder analoges Signal. Bei dem von der Steuereinheit ausgegebenen Sollwert handelt es sich um ein analoges Spannungssignal. Die Steuereinheit ist mit dem Stromregler verbunden und überträgt die Führungsgröße U_{SOLL} an einen Eingang des Stromreglers.

Der in der 2L-Stromschleife eingestellte Messsignalstrom bzw. ein aus dem Messsignalstrom abgeleitetes Signal wird dem Stromregler SR als Rückführgröße U_{IST} zugeführt. Die Rückführgröße U_{IST} entspricht einem in der 2L-Stromschleife eingestellten Istwert des Messsignalstroms. Dafür wird der Messsignalstrom zurückgelesen und die Rückführgröße ebenfalls an einen Eingang des Stromreglers SR geleitet. Die Rückführgröße U_{IST} ist bspw. eine dem Istwert entsprechende Spannung.

Es ist wenigstens ein Messwiderstand M vorgesehen, über den eine dem Istwert des Messsignalstroms entsprechende Spannung abfällt.

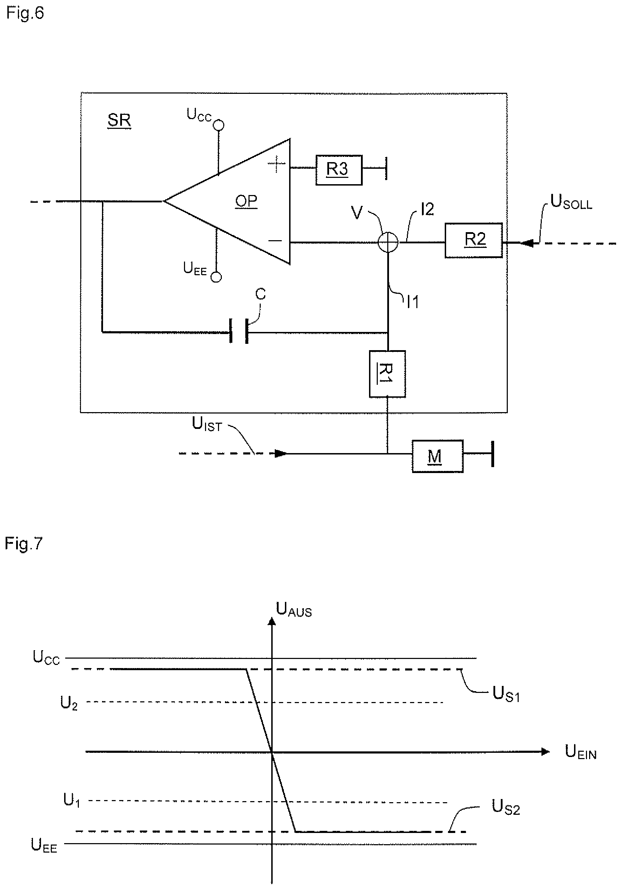

Führungsgröße U_{SOLL} und Rückführgröße U_{IST} des Messsignalstroms sind bspw. an denselben Eingang oder an verschiedene Eingänge des Stromreglers SR angelegt. Dies ist von dem konkreten Aufbau und der Funktionsweise des Stromreglers SR abhängig. Figur 6 zeigt einen möglichen Aufbau eines Stromreglers SR.

Der Stromregler SR leitet aus der Führungsgröße U_{SOLL} und der Rückführgröße U_{IST} eine Regelabweichung ab. Bei der Regelabweichung handelt es sich bspw. um die Differenz zwischen Führungsgröße U_{SOLL} und Rückführgröße U_{IST}. Ein einfacher Stromregler SR kann somit mittels eines geeignet beschalteten Operationsverstärkers OP realisiert werden. Ein solcher Stromregler SR wird mit mindestens einer Betriebspannung U_{EE}, U_{CC} versorgt und weist einen Arbeitsbereich auf. Der Arbeitsbereich und die elektronische Schaltung sind dabei so ausgelegt, dass ein einem Messwert entsprechender Messsignalstrom von der Stellgröße geregelt werden können, wobei die Stellgröße dabei innerhalb des Arbeitsbereichs liegt.

Diese vom Stromregler SR ausgegebene Stellgröße wird an die Ansteuerung A des Stellglieds SG übertragen, die das Stellglied SG, bspw. einen Ausgangstransistor, entsprechend steuert. Das Stellglied SG stellt dann einen Messsignalstrom in der 2L-Stromschleife ein.

Erfindungsgemäß wird die vom Stromregler SR ausgegebene Stellgröße einer Auswerteeinheit 10 zugeführt. In Figur 1 ist eine Auswerteeinheit 10 mit zwei Komparatorschaltungen K1 und K2 vorgesehen. Den Komparatoren K1, K2 wird die Stellgröße zugeführt. An einem ersten Komparator K1 liegt ein erster Referenzwert S1 an und an einem zweiten Komparator K2 ein zweiter Referenzwert S2. Die Komparatorschaltung kann bspw. eine analoge Komparatorschaltung sein, die im Wesentlichen aus mindestens einem geeignet beschalteten Operationsverstärker besteht. Die Komparatoren K1, K2 geben an, ob die Stellgröße über oder unter den jeweiligen Referenzwerten S1, S2 liegen und geben entsprechend(e) Signale an die Steuereinheit IC aus. Die von der Auswerteeinheit ausgegebenen Signale sind bspw. die jeweilige obere oder untere Sättigungsspannung der als Komparatoren beschalteten Operationsverstärker K1, K2. Die Steuereinheit IC empfängt die Signale und kann entsprechend einer Auswertungsroutine ein OK-Signal oder ein Fehlersignal auslösen. Im Regelbetrieb wird der von der Steuereinheit IC mittels der Führungsgröße U_{SOLL} vorgegebene Sollwert des Messsignalstroms in der 2L-Stromschleife eingestellt. Der Sollwert entspricht einem von einem Messaufnehmer/Sensor S aufgenommenen Messwert. Die Führungsgröße U_{SOLL} und die Rückführgröße U_{IST} werden dem Stromregler SR zugeführt, bspw. durch eine dem Sollwert oder Istwert jeweils entsprechenden elektrischen Strom oder Spannung. So sind in den Verlauf der Signalpfade der Rückführgröße U_{IST} und der Führungsgröße U_{SOLL} Widerstände eingebaut, die für eine geeignete Umformung von Strom in Spannung oder umgekehrt sorgen.

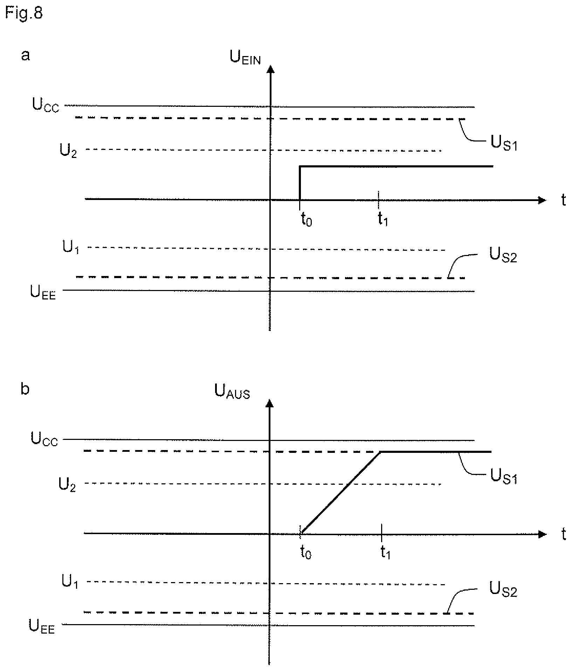

Der Stromregler SR besteht im Wesentlichen aus einem Operationsverstärker OP, der mit einer Betriebsspannung U_{EE} bzw. U_{CC} versorgt wird. Der Stromregler SR erzeugt eine Stellgröße, die den von dem Ausgangstransistor SG einzustellende Messsignalstrom bestimmt. Bei fehlerfreiem Betrieb liegt die Stellgröße innerhalb des Arbeitsbereichs des Operationsverstärkers OP. Verlässt die Stellgröße den Arbeitsbereich, wird dies von den Komparatoren K1, K2 der Auswerteeinheit 10 durch ein entsprechendes Ausgangssignal signalisiert. Das entsprechende Ausgangssignal ist eine von den Komparatoren K1, K2 ausgegebene Spannung. Der Stromregier zeigt einen Fehler dadurch an, dass er seinen für den Regelbetrieb vorgesehenen Arbeitsbereich verlässt. In Figur 8 ist eine solche Situation gezeigt.

Der Arbeitsbereich des Operationsverstärkers OP ist gerade so eingestellt, dass er einen Messsignalstrom in der 2L-Stromschleife innerhalb einer vorgegebenen Zeit (üblicherweise im Millisekundenbereich) regelt. Kurzzeitig kann es dabei zu Überschreitungen des Arbeitsbereichs kommen.

Das Stellglied SG stellt die vom Stromregler SR ausgegebene Stellgröße in der 2L-Stromschleife ein. Istwert und Sollwert des Messsignalstroms und daher auch Führungs- U_{SOLL} und Rückführgröße U_{IST} stimmen anschließend überein.

Liegt dagegen ein Defekt, eine Störung oder ein sonstiger Fehler vor, so unterscheidet sich die Führungsgröße U_{SOLL} dauerhaft von der Rückführgröße U_{IST}. Der Stromregler SR versucht diese Regelabweichung auszugleichen und übersteuert dabei, da die vom Fehler verursachte Regelabweichung nicht durch eine Änderung der Stellgröße ausgeglichen wird. Der Operationsverstärker OP des Stromreglers SR geht in seine Sättigungsspannung über. Je nachdem, ob eine positive oder negative Differenz zwischen Führungs- U_{IST} und Rückführgröße U_{SOLL} vorliegt, geht der Operationsverstärker OP in die obere oder untere Sättigungsspannung über. Figur 8 zeigt den Verlauf der Stellgröße bei einer konstanten, nicht verschwindenden Regelabweichung.

Die Stellgröße wird abgegriffen und der Auswerteschaltung, die zwei Komparatoren K1, K2 umfasst, zugeführt. Die zwei Komparatoren K1, K2 vergleichen die Stellgröße mit jeweils einem Referenzwert S1, S2. Dafür wird an den Komparator K1 ein Referenzwert S1 angelegt, der über dem Arbeitsbereich des Operationsverstärkers OP liegt. Am zweiten Komparator K2 wird die Stellgröße mit einem Referenzwert S2 verglichen, der unterhalb des Arbeitsbereichs des Operationsverstärkers OP liegt. Je nachdem ob die Stellgröße oberhalb oder unterhalb des Referenzwertes S1, S2 liegt, geht der aus einem Operationsverstärker OP bestehende Komparator K1, K2 in seinen oberen oder unteren Sättigungsbereich. Abhängig von der ausgegebenen Sättigungsspannung lässt sich feststellen, ob die Stellgröße oberhalb, unterhalb oder innerhalb des von den Referenzwerten S1, S2 vorgegebenen Bereichs liegt. Die von den Komparatoren K1, K2 ausgegebenen Signale besitzen digitalen Charakter, so dass mittels der Signale eine Digitalschaltung angesprochen werden kann. Diese ein Bit wertigen digitalen Signale werden der Steuereinheit IC zugeführt.

Möglich ist auch die Verwendung einer Speichereinheit bspw. einer RAM oder ROM, die mit einer Steuereinheit IC kommuniziert. Die Steuereinheit IC fragt die Stellgröße entsprechend einer Überwachungsroutine ab und wertet sie aus. Liegt die Stellgröße bspw. länger als 1s außerhalb des Arbeitsbereichs, so wird ein Fehlersignal ausgegeben und ein Fehlerstrom in der 2L-Stromschleife eingestellt.

Ein fehlerhafter Messsignaistrom in der 2L-Stromschleife kann sich u.a. aufgrund einer Beschädigung der elektrischen Leiterbahnen oder einer mangelhaften Spannungsversorgung einstellen. Die Defekte werden oftmals durch korrosive Einflüsse aus der Umgebung des Messgerätes oder fehlerhafte Lötstellen ausgelöst.

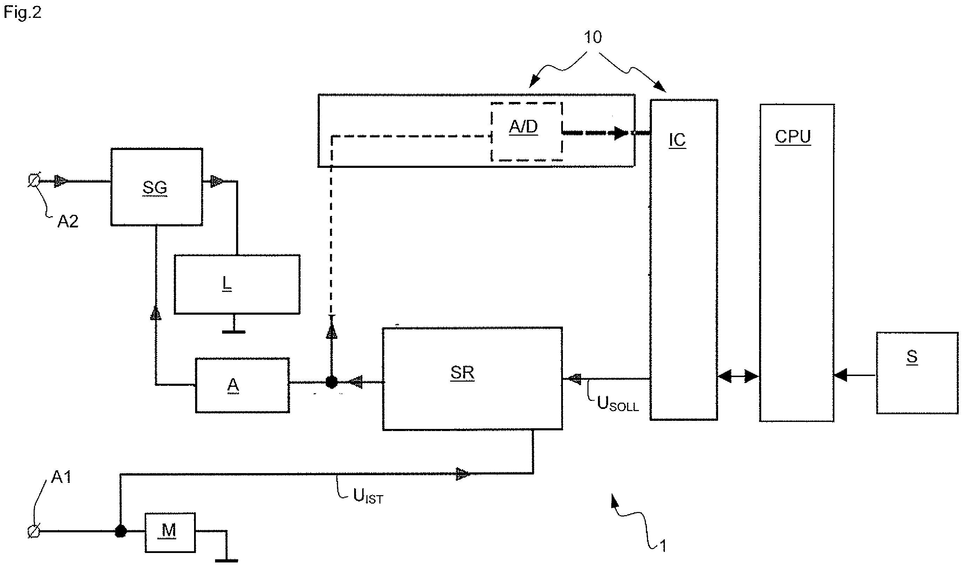

Figur 2 zeigt eine weitere Ausführungsform der erfindungsgemäßen Mess- und Betriebselektronik. In dieser Ausführungsform besteht die Auswerteeinheit 10 im Wesentlichen aus einem externen Analog/Digital-Umformer A/D und aus der Steuereinheit IC. Die weitere Mess- und Betriebselektronik 1 entspricht der in Figur 1 gezeigten. Die Stellgröße wird dem Analog/Digital-Umformer A/D zugeführt und digitalisiert. An die Steuereinheit IC wird ein n Bit wertiges digitales Signal übertragen, das der Stellgröße entspricht. Das n Bit wertige digitale Signal wird von der Steuereinheit IC mit einem Referenzwert S1, S2 verglichen. Der Referenzwert S1, S2 ist bspw. in der Steuereinheit hinterlegt. Anstelle des Analog/Digital-Umformers A/D oder zusätzlich kann ein digitaler Komparator vorgesehen sein, der ein digitales der Stellgröße entsprechendes Signal bspw. bitweise mit einem digitalen Referenzwert vergleicht.

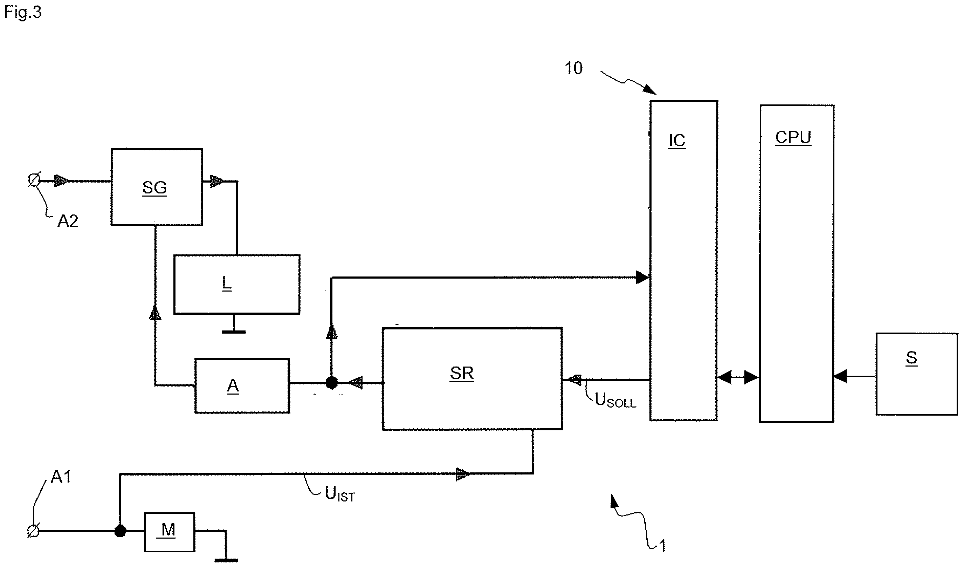

Figur 3 zeigt eine weitere Ausführungsform der erfindungsgemäßen Mess- und Betriebselektronik 1. Die Stellgröße wird über einen Signalpfad direkt an einen analogen Eingang der Steuereinheit IC übertragen. Die übrige Mess- und Betriebselektronik 1 entspricht der in Figur 1 gezeigten. Die Auswertung - der Vergleich der Stellgröße mit wenigstens einem Referenzwert S1, S2 - erfolgt dann mittels der Steuereinheit IC, d.h. die Stellgröße wird digitalisiert und mit wenigstens einem Referenzwert S1, S2 verglichen.

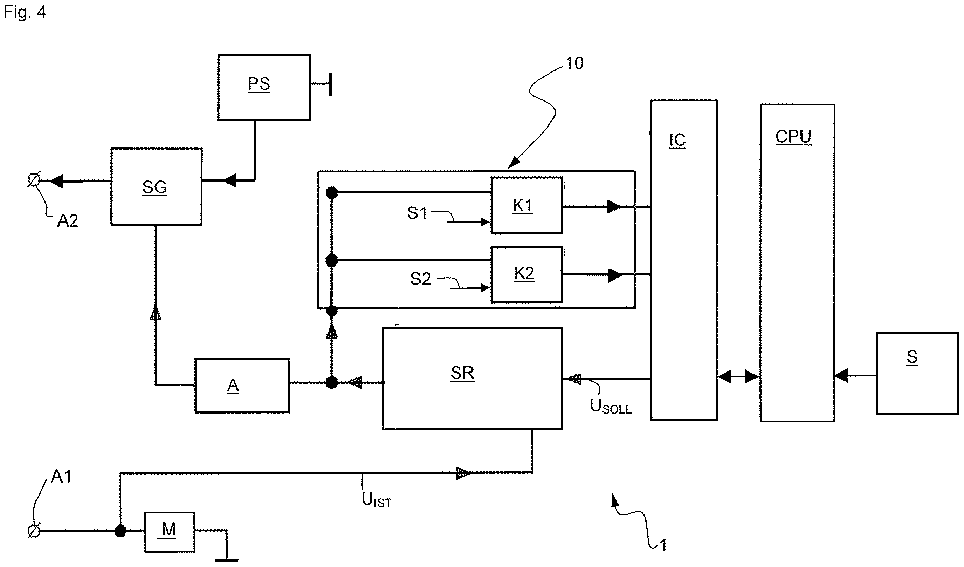

Figur 4 zeigt die Mess- und Betriebselektronik 1 eines Vier-Leiter-Messgerätes. Das Vier-Leiter-Messgerät wird über mindestens zwei elektrische Leitungen - nicht explizit gezeigt - mit einer (Betriebs-) Spannung versorgt. Messgeräte, die einen Strombedarf von mehr als 3,6 mA haben, benötigen eine zusätzliche Spannungsversorgung PS. Solche Messgeräte sind allgemein unter der Bezeichnung Vier-Leiter Messgeräte bekannt. Der in der Stromschleife mit den Anschlüssen A1, A2 eingestellte Strom entspricht dabei einem Messwert. Auch hier ist es vorteilhaft, den Strom zu überwachen. Die Stromüberwachung erfolgt wie bei der in Figur 1, 2 oder 3 gezeigten und erläuterten Mess- und Betriebselektronik 1. Die Auswerteeinheit 10 kann dabei aus einer analogen oder digitalen Komparatorschaltung K1, K2, einem Analog/Digital-Umformer A/D und/oder aus der Steuereinheit IC bestehen.

Die Spannungsversorgung PS stellt typischerweise eine Spannung von 24 V zur Verfügung. Die Last L wird ebenfalls über die Spannungsversorgung PS versorgt, dies ist nicht explizit gezeigt. Die Mess- und Betriebselektronik 1 ist über die Anschlüsse A1, A2 an eine Stromschleife angeschlossen. In der Stromschleife wird der einen Messwert repräsentierende Messsignalstrom eingestellt. Die Spannungsversorgung PS ist mit dem Stellglied SG verbunden und stellt dem Stellglied SG eine Spannung zur Verfügung, mittels der ein Messsignalstrom in der Stromschleife eingestellt wird. Die Stromschleife wird aktiv betrieben. Ausgehend von der Stellgröße wird über die Ansteuerung A und das Stellglied ein bestimmter Messsignalstrom in der Stromschleife eingestellt. Die Ansteuerung A ist dabei ebenso wie in den Figuren 1 bis 3 nicht zwingend erforderlich. Die Ansteuerung A besteht dabei im Wesentlichen aus einer Schaltung die wenigstens einen Kondensator, insbesondere einen Differentialkondensator, und elektrische Widerstände umfasst.

Aufgrund der vorhandenen Energie der Spannungsversorgung PS der Mess- und Betriebselektronik 1 sind folgende Betriebsmodi mit einem den Messwert repräsentierenden Messsignalstrom möglich:
i) 0 bis 20 mA, aktiv
ii) 4 bis 20 mA, aktiv
iii) 0 bis 20 mA, passiv
iv) 4 bis 20 mA, passiv

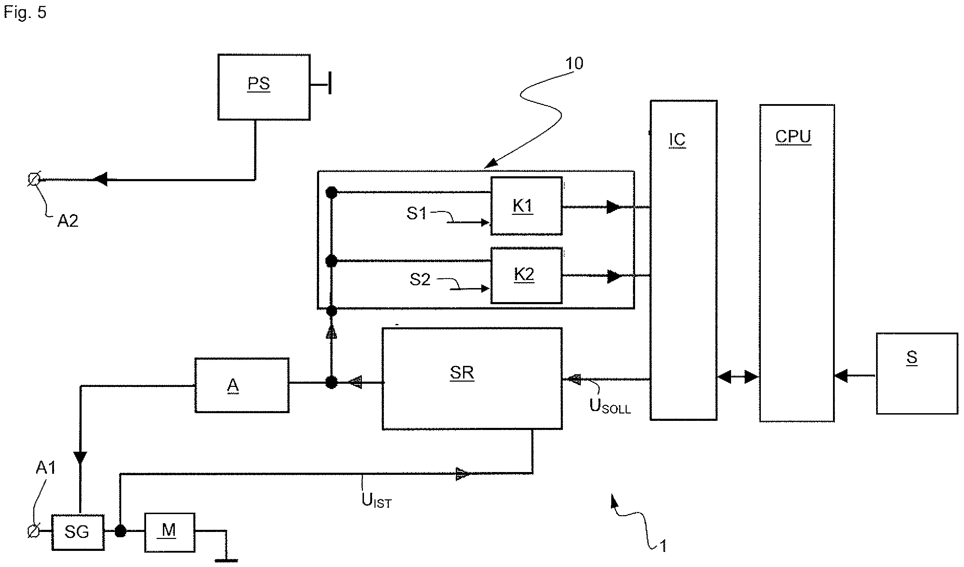

Dabei entspricht iv) der Stromschleife bei 2L-Geräten mit 4 bis 20 mA, wie in Figur 1, 2 und 3 beschrieben. Beim aktiven Betriebsmodus ist die Spannungsversorgung direkt (s. Figur 5) oder wenigstens über das Stellglied (s. Figur 4) mit der Stromschleife verbunden. Kennzeichnend für den passiven Betriebsmodus ist, dass das die restliche Betriebselektronik, bisher gekennzeichnet durch die Last L, von der Spannungsversorgung PS versorgt wird und nicht mit der Stromschleife die einen Messsignalstrom überträgt verbunden ist.

Figur 5 zeigt eine weitere Schaltungsanordnung der Mess- und Betriebselektronik 1 eines Vier-Leiter-Messgerätes. Das Stellglied SG ist nachfolgend an den Anschluss A1 an die Stromschleife und noch vor den Messwiderstand M und den Stromregler SR angeordnet. Das Stellglied SG wird weiterhin über die Ansteuerung A von dem Stromregier SR angesprochen. Die Spannungsversorgung PS ist direkt mit dem Anschluss A2 verbunden.

Figur 6 zeigt eine mögliche Realisierung eines Stromreglers SR. Der Stromregier SR besteht im Wesentlichen aus einem geeignet beschalteten Operationsverstärker OP mit einem typischen Verstärkungsfaktor von 100 000. Die Rückführgröße U_{IST}, die einem Istwert des in der 2L-Stromschleife eingestellten Messsignalstroms entspricht, wird dem Stromregler SR zugeführt. Über den Messwiderstand M fällt eine Spannung ab und über den Widerstand R₁ fließt dann ein Strom I₁ in den Summationspunkt S. Die Steuereinheit IC stellt eine der Führungsgröße U_{SOLL} entsprechende Spannung ein. Über den Widerstand R₂ fließt dann ein Strom I₂ in den Summationspunkt S. Aufgrund des am Operationsverstärker OP vorgesehenen hohen Eingangswiderstands fließt in den invertierenden Eingang (-) des Operationsverstärkers allerdings kein Strom. Als Eingangswiderstand ist typischerweise ein Widerstand ab 1 MegaOhm (1x10⁶ Ohm) vorzugsweise ab 1 GigaOhm (1x10⁹ Ohm)vorgesehen. Am nicht invertierenden Eingang des Operationsverstärkers OP ist als Bezugspotential die Masse (0 V) angelegt. Der Operationsverstärker OP versucht die Differenz der an seinen Eingängen (+,-) anliegenden Spannungen auszugleichen, indem er die Spannungsdifferenz verstärkt und mit entgegensetzter Polung ausgibt. Die verstärkte Spannungsdifferenz wird an den invertierenden Eingang (-) zurückführt. Die vom Operationsverstärker OP ausgegebene verstärkte Spannungsdifferenz entspricht der Stellgröße und wird der Ansteuerung A zugeführt.

Der Kondensator C dient als Speicher, der die an ihm anliegende Spannung über die Zeit aufaddiert. Weiterhin reduziert der Kondensator C die Frequenzbandbreite des Stromreglers SR. So ist sichergestellt, dass der Stromregler SR stabil funktioniert und nicht oszilliert. Der durch den Kondensator C als Integrator (Integrierer) beschaltete Operationsverstärker OP integriert die Differenz zwischen der Führungs- U_{SOLL} und der Rückführgröße U_{IST}. Liegt eine Differenz zwischen Führungs- U_{SOLL} und Rückführgröße U_{IST} vor, verändert sich die Ausgangsspannung des Integrators bzw. die Stellgröße und beeinflusst dadurch über die 2L-Stromschleife die Differenz zwischen Führungs- U_{SOLL} und Rückführgröße U_{IST} so, dass die Differenz annähernd Null wird.

Der Operationsverstärker OP wird mit einer oberen Betriebsspannung U_{EE} und einer unteren Betriebsspannung U_{CC} versorgt und weist einen Arbeitsbereich auf, der zwischen diesen Betriebsspannungen liegt. Der Arbeitsbereich ist so ausgelegt, dass ein Messsignalstrom zw. 4 mA und 20 mA durch eine von dem Operationsverstärker OP ausgegebenen Stellgröße eingeregelt werden kann.

Wird der Stromregler SR bspw. mit einer oberen Betriebsspannung U_{CC} von 3 Volt (V) versorgt und ist die untere Betriebsspannung U_{EE} die Masse (0 V), so liegt ein möglicher Arbeitsbereich bspw. zwischen 0,5 V und 2,5 V. Die vom Stromregler SR ausgegebene Regelabweichung liegt im Normalfall, d.h. dem fehlerfreien Regelbetrieb, innerhalb dieses Arbeitsbereichs. Der Arbeitsbereich ist dabei so ausgelegt, dass er den Messsignalstrom bspw. zwischen 4 und 20 mA regelt, wobei ein 4 mA Messsignalstrom bspw. einem Niedrigstfüllstand und ein Messsignalstrom von 20 mA einem maximalen Füllstand entsprechen. Der Stromregler SR ist weiterhin bspw. so ausgelegt, dass eine Regelung des Messsignalstroms von 4 mA auf 20 mA innerhalb von Millisekunden möglich ist.

Sind bspw. 12 mA in der 2L-Stromschleife eingestellt, so fallen über den Messwiderstand M mit 25 Ohm 0,3 V ab. Über den Widerstand R1 mit 25 kOhm (25x10³Ohm) fließt dann ein Strom von 12 *µ* A (12x10⁻⁶Ampere) in den Summationspunkt S. Damit die Ströme I1 und I2 im Summationspunkt S übereinstimmen, muss die Steuereinheit 1,2 V in den 100 kOhm Widerstand R2 ausgeben. Auf diese Weise kann ein Messsignalstrom zwischen 4 und 20 mA eingestellt und ausgegeben werden.

Liegt dagegen eine Störung wie bspw. eine beschädigte Leiterbahn oder eine beschädigte Anschlussstelle vor, treten Leckströme und Spannungsabfälle auf. Aufgrund eines Defekts nimmt der Messsignalstrom bspw. den Wert 12,010 mA an und über dem Messwiderstand M fällt eine Spannung von 0,300250 V ab. Die Steuereinheit gibt weiterhin 1,2 V aus, um einen Messsignalstrom von 12 mA zu erzeugen. Am Summationspunkt entsteht daher eine Fehlspannung von 200 *µ* V. Bei einer 100.000-fachen Verstärkung durch den Operationsverstärker OP ergibt sich rechnerisch eine Stellgröße von 20 V. Diesen Wert kann die Stellgröße aber nicht annehmen, da die Betriebsspannung des Operationsverstärkers OP bei lediglich 3 V liegt. Der Operationsverstärker geht also in seine Sättigung U_{S1}, die knapp unter 3 V liegt über. Durch geeignete Wahl der Referenzwerte S1, S2 der Auswerteeinheit kann erfasst werden, wenn die Stellgröße den Arbeitsbereich verlässt bzw. in die Sättigung des Operationsverstärkers OP übergeht. Tests haben gezeigt, dass auf diese Weise eine Abweichung des Messsignalstroms von ca. 1 *µ* A erfasst werden kann.

Figur 7 zeigt den Betriebs- und Arbeitsbereich eines Operationsverstärkers OP. Der Operationsverstärker OP wird von einer oberen Betriebsspannung Ucc und einer unteren Betriebsspannung U_{EE} versorgt. Die obere Sättigungsspannung U_{S1} liegt unter der oberen Betriebsspannung U_{CC}. Die untere Sättigungsspannung U_{S2} liegt über der unteren Betriebsspannung U_{EE}. Die vorgesehene Auslegung des Arbeitsbereichs des Operationsverstärkers OP ist durch die beiden Spannungen U₁ und U₂ gekennzeichnet. Die Spannungen U₁, U₂ liegen zwischen der oberen und unteren Sättigungsspannung U_{S1}, U_{S2}.

Die Referenzwerte S₁ und S₂, die zur Auswertung der Stellgröße herangezogen werden, liegen, um ein Über- oder Unterschreiten der Stellgröße über oder unter den Arbeitsbereichs zu detektieren, zwischen der Spannung U₂ und der oberen Betriebsspannung U_{CC} bzw. zwischen der Spannung U₁ und der unteren Betriebsspannung U_{EE}. Die Referenzwerte S₁, S₂ können auch so gewählt werden, dass sie der Spannung U₁ bzw. U₂ oder der oberen bzw. unteren Sättigungsspannung U_{S1}, U_{S2} entsprechen. Figur 5 zeigt weiterhin den linearen Verstärkungsbereich des Operationsverstärkers. Liegt die Eingangsspannung U_{EIN} innerhalb dieses linearen Verstärkungsbereichs, so wird sie mit dem Verstärkungsfaktor des Operationsverstärkers OP verstärkt. Liegt die Eingangsspannung U_{EIN} außerhalb des linearen Verstärkungsbereichs, so wird als Ausgangsspannung des Operationsverstärkers OP die obere oder untere Sättigungsspannung U_{S1}, U_{S2} ausgegeben. Die obere oder untere Sättigungsspannung U_{S1}, U_{S2} entspricht der maximal möglichen Verstärkung des Operationsverstärkers OP und wird durch die Betriebsspannung und die interne Schaltung des Operationsverstärkers bestimmt.

Figur 8a zeigt die Eingangsspannung U_{EIN} und Figur 8b die entsprechende Ausgangsspannung U_{AUS} des Operationsverstärker OP aus Figur 6 als Funktion der Zeit. Der Operationsverstärker OP ist wie in Figur 6 gezeigt als Integrator geschaltet und die Bezeichnungen entsprechen denen aus Figur 7.

Die Ausgangsspannung U_{AUS} ist im Wesentlichen das Zeitintegral der Eingangsspannung U_{EIN}. Liegt zwischen den Eingängen des Operationsverstärkers OP keine Spannungsdifferenz vor so bleibt auch die Ausgangsspannung U_{AUS} konstant. Auftretende Spannungsdifferenzen werden von dem Kondensator C aufaddiert und gespeichert.

Zu Beginn ist der Kondensator C ungeladen. Figur 8a zeigt ab einem Zeitpunkt t₀ eine konstante Spannungsdifferenz zwischen den Eingängen des Operationsverstärkers OP. Die Eingangsspannung U_{EIN} ist rechteckförmig. Diese Spannungsdifferenz liegt am invertierenden Eingang des Operationsverstärkers OP an und entspricht bspw. der Regelabweichung. Der nicht invertierende Eingang liegt auf Masse. Die Eingangsspannung U_{EIN} gibt der Operationsverstärker OP linear verstärkt als Ausgangsspannung U_{AUS} aus. Durch den Kondensator C wird diese aufaddiert, so dass es zu dem in Figur 8b gezeigten linear ansteigenden Verlauf der Ausgangsspannung U_{AUS} zwischen t₀ und t₁ kommt. Die Kapazität des Kondensators C ist so dimensioniert, dass sie im normalen Messbetrieb nicht überschritten wird. Alternativ wird die Kapazität, in dem Fall dass kein Fehler vorliegt, entladen. Gelingt es aufgrund bspw. eines vorliegenden Defekts in der Mess- und Betriebselektronik 1 nicht diese Spannungsdifferenz am Eingang des Operationsverstärkers OP innerhalb einer vorgesehenen Zeitspanne abzubauen, bleibt die Spannungsdifferenz erhalten und das Ausgangssignal U_{AUS} des Operationsverstärkers OP verlässt den vorgesehenen Arbeitsbereich und geht zum Zeitpunkt t₁ in die Sättigungsspannung U_{S1} über. Die Zeitspanne ist durch die Kapazität C und die Widerstände R₁, R₂ bestimmt.

Liegt die Spannungsdifferenz zwischen den Eingängen des Operationsverstärkers OP innerhalb des Arbeitsbereichs, weist die Ausgangsspannung je nach Größe der Spannungsdifferenz unterschiedliche Steigungen zwischen t₀ und t₁ auf. Das Ausgangssignal des Operationsverstärkers OP geht also unterschiedlich schnell in die Sättigungsspannung U_{S1}, U_{S2} über. Liegt die Spannungsdifferenz zwischen den Eingängen des Operationsverstärkers OP außerhalb des Arbeitsbereichs, gibt der Operationsverstärker OP als Ausgangsspannung U_{AUS} die Sättigungsspannung U_{S1}, U_{S2} aus (Siehe Figur 7).

Liegt die Ausgangsspannung U_{AUS} außerhalb des Arbeitsbereichs des Operationsverstärkers OP ist dies ein Indikator für einen vorliegenden Fehler und lässt sich mittels der vorgeschlagenen Auswerteeinheit detektieren.

### Bezugszeichenliste

- A: Ansteuerung/Treiber
- A1: Anschluss an 2L-Stromschleife
- A2: Anschluss an 2L-Stromschleife
- A/D: Analog-Digital-Umsetzer
- CPU: Steuereinheit
- IC: Steuereinheit
- I1: Strom entsprechend der Rückführgröße
- I2: Strom entsprechend der Führungsgröße
- K1: Komparator
- K2: Komparator
- L: Last
- M: Messwiderstand
- PS: Spannungsversorgung
- OP: Operationsverstärker
- R1: Widerstand
- R2: Widerstand
- R3: Widerstand
- S: Messaufnehmer/Sensor
- SR: Stromregler
- S1: Referenzwert
- S2: Referenzwert
- U_{S1}: Obere Sättigungsspannung
- U_{S2}: Untere Sättigungsspannung
- U_{SOLL}: Sollwert
- U_{IST}: Istwert
- U_{EE}: Obere Betriebsspannung
- U_{CC}: Untere Betriebsspannung
- U₁: Oberste Arbeitsbereichsspannung
- U₂: Unterste Arbeitsbereichsspannung
- U_{EIN}: Eingangsspannung in den Operationsverstärker
- U_{AUS}: Ausgangsspannung des Operationsverstärkers
- V: Vergleichsglied/Summationspunkt
- t₀: Begin des Rechteckimpuls
- t₁: Erreichen der Sättigungsspannung
- 1: Mess- und Betriebselektronik
- 10: Auswerteeinheit

## Patentansprüche

1. Messgerät mit einer Mess- und Betriebselektronik (1),
wobei die Mess- und Betriebselektronik (1) zur Bestimmung und/oder Überwachung mindestens eines Messsignals einer physikalischen und/oder chemischen Messgröße eines Messstoffs dient,
wobei die Mess- und Betriebselektronik (1) mindestens eine Steuereinheit (IC) und einen Stromregler (SR) aufweist,
wobei die Mess- und Betriebselektronik (1) an eine Stromschleife angeschlossen ist, wobei ein Messsignalstrom in der Stromschleife einen Messwert der Messgröße repräsentiert,
wobei die Steuereinheit (IC) mit dem Stromregler (SR) verbunden ist und dem Stromregler (SR) eine Führungsgröße (U_{SOLL}) vorgibt,
wobei die Führungsgröße (U_{SOLL}) einem Sollwert des Messsignalstroms entspricht,
wobei dem Stromregler (SR) eine Rückführgröße (U_{IST}) zugeführt ist,
wobei die Rückführgröße (U_{IST}) einem in der Stromschleife eingestellten Istwert des Messsignalstroms entspricht,
wobei die Rückführgröße (U_{IST}) und die Führungsgröße (U_{SOLL}) an einem Eingang des Stromreglers (SR) anliegen,
wobei der Stromregler (SR) eine aus einer Regelabweichung zwischen Rückführ- (U_{IST}) und Führungsgröße (U_{SOLL}) gebildete Stellgröße ausgibt,
**dadurch gekennzeichnet,**
**dass** das Messgerät ein Stellglied (SG) aufweist, und
**dass** das Stellglied (SG) den Messsignalstrom mittels der vom Stromregler (SR) ausgegebenen Stellgröße in der Stromschleife einstellt,
**dass** mindestens eine Auswerteeinheit (10) vorgesehen ist,
**dass** die Auswerteeinheit (10) mindestens einen vom Stromregler (SR) ausgegebenen Wert der Stellgröße mit mindestens einem Referenzwert (S₁, S₂) vergleicht,
**dass** der Vergleich angibt, ob der Wert der Stellgröße den Referenzwert (S₁, S₂) über- oder unterschreitet.

2. Messgerät nach Anspruch 1,
**dadurch gekennzeichnet,**
**dass** der Stromregler (SR) mindestens ein Vergleichsglied aufweist, wobei das Vergleichsglied die Regelabweichung bestimmt.

3. Messgerät nach Anspruch 1 oder 2 ,
**dadurch gekennzeichnet,**
**dass** der Stromregler (SR) mindestens einen Operationsverstärker (OP) aufweist.

4. Messgerät nach Anspruch 3,
**dadurch gekennzeichnet,**
**dass** das Vergleichsglied elektrisch mit einem Eingang (+, -) des Operationsverstärkers (OP) verbunden ist,
und **dass** der Operationsverstärker (OP) ausgehend von der Regelabweichung die Stellgröße erzeugt und ausgibt.

5. Messgerät nach Anspruch 3 oder 4,
**dadurch gekennzeichnet,**
**dass** der Operationsverstärker (OP) mit mindestens einer Betriebsspannung (U_{EE}, U_{CC}) versorgt ist und
**dass** der Operationsverstärker (OP) einen Arbeitsbereich unterhalb der Betriebsspannung (U_{EE}, U_{CC}) aufweist.

6. Messgerät nach Anspruch 5,
**dadurch gekennzeichnet,**
**dass** die Stellgröße den Arbeitsbereich des Operationsverstärkers (OP) verlässt, im Falle dass die Differenz zwischen Rückführgröße (U_{IST}) und Führungsgröße (U_{SOLL}) nach einer vorgegebenen Zeitspanne nicht annähernd Null ist.

7. Messgerät nach Anspruch 5 oder 6,
**dadurch gekennzeichnet,**
**dass**, im Falle dass die Stellgröße außerhalb des Arbeitsbereichs des Operationsverstärkers (OP) liegt, die Stellgröße annähernd gleich der Betriebsspannung (U_{EE}, U_{CC}) des Operationsverstärkers (OP) ist.

8. Messgerät nach einem der vorherigen Ansprüche,
**dadurch gekennzeichnet,**
**dass** der mindestens ein Referenzwert (S₁, S₂) oberhalb bzw. unterhalb des Arbeitsbereichs des Stromreglers (SR) liegt.

9. Messgerät nach einem der vorherigen Ansprüche,
**dadurch gekennzeichnet,**
**dass** die Auswerteeinheit (10) wenigstens teilweise aus einer Komparatorschaltung (K₁, K₂) und/oder einem Analog-Digital-Umformer (A/D) besteht.

10. Messgerät nach einem der vorherigen Ansprüche,
**dadurch gekennzeichnet,**
**dass** die Auswerteeinheit (10) mindestens ein Ausgangssignal ausgibt.

11. Messgerät nach einem der vorherigen Ansprüche,
**dadurch gekennzeichnet,**
**dass** das Ausgangssignal an die Steuereinheit (IC) übertragbar ist.

12. Messgerät nach einem der vorherigen Ansprüche,
**dadurch gekennzeichnet,**
**dass** die Steuereinheit (IC) ein dem Ausgangssignal entsprechendes Signal. insbesondere ein Fehlersignal, ausgibt.

## Claims

1. Measuring device with measuring and operating electronics (1),
wherein the measuring and operating electronics (1) are used to determine and/or monitor at least one measuring signal of a physical and/or chemical measured variable of a medium,
wherein the measuring and operating electronics (1) have at least one control unit (IC) and one current controller (SR),
wherein the measuring and operating electronics (1) are connected to a current loop, wherein a measuring signal current in the current loop represents a measured value of the measured variable,
wherein the control unit (IC) is connected to the current controller (SR) and specifies a reference variable (U_{SOLL}) for the current controller (SR), wherein the reference variable (U_{SOLL}) corresponds to a target value of the measuring signal current,
wherein a feedback variable (U_{IST}) is supplied to the current controller (SR),
wherein the feedback variable (U_{IST}) corresponds to an actual value of the measuring signal current which is set in the current loop,
wherein the feedback variable (U_{IST}) and the reference variable (U_{SOLL}) are present at an input of the current controller (SR)
wherein the current controller (SR) issues a manipulated variable which is formed from a control deviation between the feedback variable (U_{IST}) and the reference variable (U_{SOLL}),
**characterized in that**
the measuring device has an actuator (SG), and **in that** the actuator (SG) sets the measuring signal current using the manipulated variable issued by the current controller (SR) in the current loop,
**in that** at least one evaluation unit (10) is provided,
**in that** the evaluation unit (10) compares at least one value of the manipulated variable, issued by the current controller (SR), with at least one reference value (S₁, S₂),
**in that** the comparison indicates whether the value of the manipulated variable exceeds or drops below the reference value (S₁, S₂).

2. Measuring device as claimed in Claim 1
**characterized in that**
the current controller (SR) has at least one comparator module, wherein the comparator module determines the control deviation.

3. Measuring device as claimed in Claim 1 or 2
**characterized in that**
the current controller (SR) has at least one operational amplifier (OP).

4. Measuring device as claimed in Claim 3
**characterized in that**
the comparator module is electrically connected to the input (+, -) of the operational amplifier (OP),
and **in that** the operational amplifier (OP) generates and outputs the manipulated variable on the basis of the control deviation.

5. Measuring device as claimed in Claim 3 or 4
**characterized in that**
the operational amplifier (OP) is supplied with at least an operating voltage (U_{EE}, Ucc) and **in that** the operational amplifier (OP) has an operating range below the operating voltage (U_{EE}, U_{CC}).

6. Measuring device as claimed in Claim 5
**characterized in that**
the manipulated variable leaves the operating range of the operational amplifier (OP) if the difference between the feedback variable (U_{IST}) and the reference variable (U_{SOLL}) is not approximately zero after a predefined period of time.

7. Measuring device as claimed in Claim 5 or 6
**characterized in that**
in the event that the manipulated variable is outside the operating range of the operational amplifier (OP), the manipulated variable is approximately equal to the operating voltage (U_{EE}, Ucc) of the operational amplifier (OP).

8. Measuring device as claimed in one of the previous claims,
**characterized in that**
the at least one reference value (S₁, S₂) is above or below the operating range of the current controller (SR).

9. Measuring device as claimed in one of the previous claims,
**characterized in that**
the evaluation unit (10) at least partially consists of a comparator circuit (K₁, K₂) and/or an analog-to-digital converter (A/D).

10. Measuring device as claimed in one of the previous claims,
**characterized in that**
the evaluation unit (10) issues at least one output signal.

11. Measuring device as claimed in one of the previous claims,
**characterized in that**
the output signal can be transmitted to the control unit (IC).

12. Measuring device as claimed in one of the previous claims,
**characterized in that**
the control unit (IC) issues a signal, particularly an error signal, that corresponds to the output signal.

## Revendications

1. Appareil de mesure avec une électronique de mesure et d'exploitation (1),
pour lequel l'électronique de mesure et d'exploitation (1) sert à la détermination et/ou la surveillance d'au moins un signal de mesure d'une grandeur de mesure physique et/ou chimique d'un produit mesuré,
pour lequel l'électronique de mesure et d'exploitation (1) comporte au minimum une unité de commande (IC) et un régulateur de courant (SR),
pour lequel l'électronique de mesure et d'exploitation (1) est raccordée à une boucle de courant, un courant de signal de mesure dans la boucle de courant représentant une valeur mesurée de la grandeur de mesure,
pour lequel l'unité de commande (IC) est reliée avec le régulateur de courant (SR) et le régulateur de courant définit une grandeur de consigne (U_{SOLL}), la grandeur de consigne (U_{SOLL}) correspondant à une valeur de consigne du courant de signal de mesure,
pour lequel une grandeur réelle (U_{IST}) est réacheminée au régulateur de courant (SR), la grandeur réelle (U_{IST}) correspondant à une valeur réelle du courant du signal de mesure réglé dans la boucle de courant, la grandeur réelle (U_{IST}) et la grandeur de consigne (U_{SOLL}) étant appliquées à une entrée du régulateur de courant (SR),
pour lequel le régulateur de courant (SR) émet une grandeur de réglage formée à partir de l'écart de régulation entre la grandeur réelle (U_{IST}) et la grandeur de consigne (U_{SOLL}),
**caractérisé**
**en ce que** l'appareil de mesure comporte un organe de réglage (SG), et en ce que l'organe de réglage (SG) règle la grandeur de réglage émise dans la boucle de courant,
**en ce qu'**est prévue au minimum une unité d'exploitation (10),
**en ce que** l'unité d'exploitation (10) compare au moins une valeur de la grandeur de réglage, émise par le régulateur de courant (SR), avec au moins une valeur de référence (S₁, S₂),
**en ce que** la comparaison indique si la valeur de la grandeur de réglage dépasse par excès ou par défaut la valeur de référence (S₁, S₂).

2. Appareil de mesure selon la revendication 1,
**caractérisé**
**en ce que** le régulateur de courant (SR) comporte au minimum un module comparateur, le module comparateur déterminant l'écart de régulation.

3. Appareil de mesure selon la revendication 1 ou 2,
**caractérisé**
**en ce que** le régulateur de courant (SR) comporte au minimum un amplificateur opérationnel (OP).

4. Appareil de mesure selon la revendication 3,
**caractérisé**
**en ce que** le module comparateur est relié électriquement avec l'entrée (+, -) de l'amplificateur opérationnel (OP),
et **en ce que** l'amplificateur opérationnel (OP) génère et émet la grandeur de réglage à partir de l'écart de régulation.

5. Appareil de mesure selon la revendication 3 ou 4,
**caractérisé**
**en ce que** l'amplificateur opérationnel (OP) est alimenté avec au moins une tension de service (U_{EE}, U_{CC}) et
**en ce que** l'amplificateur opérationnel (OP) présente une plage de travail située au-dessous de la tension de service (U_{EE}, U_{CC}).

6. Appareil de mesure selon la revendication 5,
**caractérisé**
**en ce que** la grandeur de réglage quitte la plage de travail de l'amplificateur opérationnel (OP) dans le cas où la différence entre la grandeur réelle (U_{IST}) et la grandeur de consigne (U_{SOLL}) n'est pas approximativement nulle après un intervalle de temps prédéfini.

7. Appareil de mesure selon la revendication 5 ou 6,
**caractérisé**
**en ce que**, dans le cas où la grandeur de réglage est en dehors de la plage de travail de l'amplificateur opérationnel (OP), la grandeur de réglage est approximativement égale à la tension de service (U_{EE}, Ucc) de l'amplificateur opérationnel (OP).

8. Appareil de mesure selon l'une des revendications précédentes,
**caractérisé**
**en ce que** l'au moins une valeur de référence (S₁, S₂) se situe au-dessus ou au-dessous de la plage de travail du régulateur de courant (SR).

9. Appareil de mesure selon l'une des revendications précédentes,
**caractérisé**
**en ce que** l'unité d'exploitation (10) est constituée au moins partiellement d'un circuit comparateur (K₁, K₂) et/ou d'un convertisseur analogique-numérique (A/D).

10. Appareil de mesure selon l'une des revendications précédentes,
**caractérisé**
**en ce que** l'unité d'exploitation (10) émet au moins un signal de sortie.

11. Appareil de mesure selon l'une des revendications précédentes,
**caractérisé**
**en ce que** le signal de sortie peut être transmis à l'unité de commande (IC).

12. Appareil de mesure selon l'une des revendications précédentes,
**caractérisé**
**en ce que** l'unité de commande (IC) émet un signal correspondant au signal de sortie, notamment un signal d'erreur.
